# EUROPÄISCHE PATENTSCHRIFT

(11) **EP 0 288 426 B1**
(45) Veröffentlichungstag und Bekanntmachung des Hinweises auf die Patenterteilung: **27.01.1993**
(21) Anmeldenummer: 88810101.1
(22) Anmeldetag: 22.02.1988
(51) Int. Cl.: B65G 1/04, B65G 57/18

(54) **Lageranlage mit wenigstens einer Palette für das Lagergut**
Storing device with at least one pallet for stacked materials
Installation de stockage avec au moins une palette servant à l'emmagasinage

(30) Priorität: 23.02.1987 CH 669/87
(43) Veröffentlichungstag der Anmeldung: 26.10.1988
(73) Patentinhaber: Sieber, Hans, CH-9524 Zuzwil (CH)
(72) Erfinder: Sieber, Hans, CH-9524 Zuzwil (CH)
(74) Vertreter: Kulhavy, Sava, Dipl.-Ing.

(56) Entgegenhaltungen:
- DE-A- 2 047 604
- FR-A- 1 486 584
- FR-A- 2 263 954

## Beschreibung

Die vorliegende Erfindung betrifft eine Lageranlage nach dem Oberbegriff des Anspruchs 1.

Eine Anlage dieser Gattung ist aus der europäischen Patentanmeldung EP-A-0 206 992 bereits bekannt. Die einander gegenüberliegenden Flächen der Finger sind im wesentlichen plan. Dabei sind sie allerdings aufgerauht, damit die einzelnen Stücke von Lagergut sicher ergriffen werden können. Bei solchen Fingern muss eine sehr hohe Anpresskraft angewendet werden, um die Stücke von Lagergut durch blossen Reibschluss zwischen den Fingern und dem Lagergut halten zu können. Zugleich muss dafür gesorgt werden, dass die Finger sich bei der Anwendung einer so grossen Anpresskraft nicht verbiegen. Denn in einem solchen Fall könnten sich das bzw. die zuunterst befindlichen Gutsstücke während des Handhabungsvorganges von den Fingern in unkontrolierter Weise lösen. Um die Möglichkeit einer Verbiegung der Finger zu vermeiden, sind die Finger sehr dick bzw. sehr breit ausgeführt. Die Spalte zwischen zwei benachbarten Stapeln von Lagergut sind durch die Breite der Palettenzinken gegeben. Damit so breite Finger in diese Spalte hineinfahren können, um das Lagergut handhaben zu können, müssen die Spalte und somit auch die Körper der Zinken dementsprechend breit ausgeführt sein. Solche breiten Zinken vermindern jedoch die Grösse der Grundfläche, welche für die Lagerung von Gut 5 in der Palette zur Verfügung steht. Je länger die Palette ist, um so mehr wirkt sich dieser Nachteil aus.

Die Aufgabe der vorliegenden Erfindung ist, diesen und noch weitere Nachteile des Standes der Technik zu beseitigen.

Diese Aufgabe wird bei der Lageranlage der eingangs genannten Art erfindungsgemäss so gelöst, wie dies im kennzeichnenden Teil des Anspruchs 1 definiert ist.

Nachstehend werden Ausführungsbeispiele der vorliegenden Erfindung anhand der beiliegenden Zeichnung näher erläutert. Es zeigt:
Fig. 1 in einer Frontansicht einen Abschnitt einer Palette und von Handhabungsfinger der vorliegenden Lageranlage,
Fig. 2 teilweise in einem vertikal verlaufenden Schnitt die Endpartien der Handhabungsfinger nach Fig. 1 und
Fig. 3 ein Fach der Palette gemäss Fig. 1 mit Lagergut von eckigem Querschnitt.

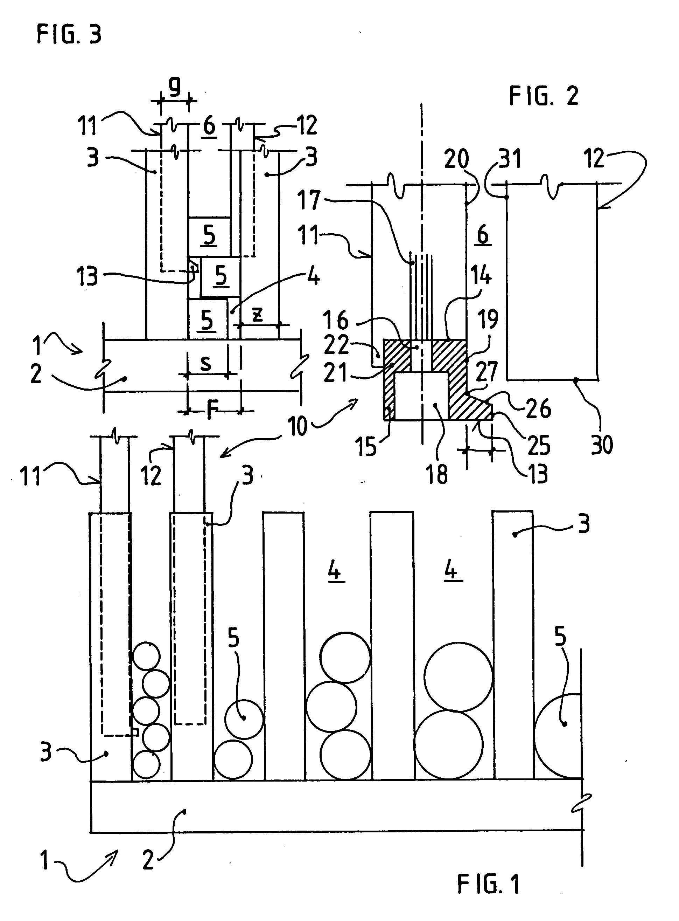

Die vorliegende Lageranlage weist eine Palette 1 auf, von deren Boden 2 weg sich vertikal verlaufende Zinken 3 erstrecken. In Fig. 1 ist nur der linke Endabschnitt einer solchen Palette dargestellt. Hinter den in Fig. 1 gezeigten Zinken 3 befinden sich weitere und Reihen bildende Zinken, die aus Fig. 1 nicht ersichtlich sind, weil die Palette 1 in Fig. 1 in Frontansicht dargestellt ist. Der Abstand zwischen benachbarten Zinken 3 ist, wie aus Fig. 1 ersichtlich, unterschiedlich, und zwar entsprechend der Dicke bzw. Breite der zu lagernden Stücke von Gut 5. In der Palette 1 gemäss Fig. 1 sind in den einzelnen Fächern 4 Stäbe 5 mit rundem Querschnitt gelagert, wobei die Stäbe 5 in den einzelnen Fächern 4 unterschiedlichen Durchmesser aufweisen.

Die vorliegende Anlage weist ferner eine Vorrichtung 10 zur Handhabung von Lagergut 5. Von dieser Vorrichtung 10 sind nur die zuvorderst liegenden Finger 11 und 12 zur Ergreifung der Lagergutsstücke 5 in der Zeichnung dargestellt. Dies deswegen, weil, wie bereits erwähnt worden ist, die Anlage in Frontansicht dargestellt ist. Die Führung und der Antrieb dieser Finger 11 und 12 gehören zum Stand der Technik. Die hintereinander befindlichen Finger 11 bzw. 12 können in die Lücken zwischen hintereinander angeordneten Zinken 3 hineinfahren, wenn die Gutsstücke 5 in die Fächer 4 abgelagert oder diesen entnommen werden sollen.

Die Endpartien der Finger 11 und 12 sind in Fig. 2 vergrössert dargestellt. Die freie Endpartie des ersten Fingers 11 ist mit einer seitlich abstehenden Nase 13 versehen, die sich von diesem Finger 11 weg gegen den anderen Finger 12 hin erstreckt. Diese Nase 13 vermindert die Breite der unteren Mündung des Spaltes 6 zwischen den zwei Fingern 11 und 12, so dass das Lagergut, wenn die Finger 11 und 12 gegeneinander gepresst werden, auf dieser Nase 13 ruht. Die Lagergutsstücke 5 werden im vorliegenden Fall zwischen den Fingern 11 und 12 vor allem formschlüssig gehalten, so dass die genannte Anpresskraft wesentlich kleiner sein kann als dem im Stand der Technik der Fall ist.

Im dargestellten Ausführungsbeispiel weist die Stirnfläche des Fingers 11 eine Einbuchtung 14 auf, welche sich gegen den gegenüberliegenden Finger 12 hin öffnet. In dieser Einbuchtung 14 ist die Grundpartie eines Einsatzstückes 15 eingesetzt. Die Grundpartie des Einsatzstückes 15 ist mit einer durchgehenden Bohrung 16 versehen. Mit dieser Bohrung 16 fluchtet ein Gewindeloch 17 im Körper des ersten Fingers 11, so dass das Einsatzstück 15 mit Hilfe einer Schraube am Finger 11 befestigt sein kann. Das Einsatzstück 15 ist auch mit einer Vertiefung 18 versehen, in der der Kopf der genannten Befestigungsschraube Platz finden kann.

Die bereits erwähnte Nase 13 ist an der dem anderen Finger 12 gegenüberliegenden Stirnfläche 19 des Einsatzstückes 15 angeformt. Diese Stirnfläche 19 des Einsatzstückes 15 fluchtet mit der Strinfläche 20 des Körpers des ersten Fingers 11, so dass die dem zweiten Finger 12 zugewandte Seiten- bzw. Stirnfläche 19 und 20 des ersten Fingers 11 plan ist. Die rückwärtige Seitenfläche 21 des Einsatzstückes 15 stützt sich auf einem Wandstück 22 ab, welches die Einbuchtung 14 seitlich begrenzt. Dieses Wandstück 22 des ersten Fingers 11 fängt die meisten Kräfte ab, welche von den zwischen den Fingern 11 und 12 geklemmten Lagerstücken 5 auf die Nase 13 ausgeübt werden.

Die Nase 13 weist eine Frontfläche 25 sowie einen Rücken 26 auf. Der Uebergang zwischen dem Nasenrücken 26 und der Stirnfläche 19 des Einsatzstückes 14 kann als Nasenansatz 27 bezeichnet werden. Damit die Handhabungsvorrichtung 10 richtig funktioniert, ist die Länge des zweiten Fingers 12 in bezug auf die Lage des Nasenansatzes 27 von Bedeutung. Die Länge des zweiten Fingers 12 muss kleiner sein als die Länge jener Partie des mit der Nase 13 versehenen Fingers 11, welche sich vom Beginn (nicht dargestellt) des ersten Fingers 11 bis zum Nasenansatz 27 erstreckt. Mit anderen Worten kann man diesen Fakt so zum Ausdruck bringen, dass die Bodenwand 30 des glatten Fingers 12 höher liegen muss als der Nasenansatz 27 am anderen Finger 11.

In Fig. 3 ist ein Ausschnitt aus einer Palette 1 dargestellt, in der Stücke 5 mit quadratischem Querschnitt gelagert sind. Damit ein oder mehrere Stücke 5 von Lagergut durch die Finger 11 und 12 ergriffen werden können, muss es möglich sein, dass die Stücke 5 im Fach 4 der Palette 1 seitlich verschoben werden können. Deswegen ist die Breite F des Faches 4 grösser als die Breite S eines Stückes 5 von Lagergut. Die Breite F des Faches 4 muss mindestens um die Länge N der Nase 13 grösser sein als die Breite S eines Stückes 5 von Lagergut. Denn sonst würde die Nase 13 das dieser Nase 13 gegenüberliegende Stück 5 gegen den dahinterliegenden Zinken 3 anpressen, was Störungen im Betrieb der Anlage zur Folge haben könnte. Die Breite F des Faches 4 muss andererseits kleiner sein als zwei Breiten S eines Lagergutsstückes 5, denn sonst könnten zwei Stücke 5 von Lagergut in einem Fach 4 nebeneinander liegen und die Auslagerung derselben könnte ordnungsgemäss nicht durchgeführt werden.

Damit die Breite F des Faches bei Lagergutsstücken mit unterschiedlicher Breite innerhalb der genannten Grenzen liegen kann, weist eine Palette 1 Fächer 4 von unterschiedlicher Breite auf, wie dies in Fig. 1 gezeigt ist. Die Zinken 3 können im Palettenboden 2 zu diesem Zweck derart gelagert sein, dass deren Lage um kleine Distanzen seitlich geändert werden kann, um die jeweils optimale Breite der Fächer 4 leicht erreichen zu können.

Ferner ist darauf hinzuweisen, dass der Körper der Zinken 3 eine minimale Breite aufweisen muss. Dies deswegen, weil die Finger 11 und 12 im geöffneten Zustand in die Lücken zwischen den Zinken 3 hineinfahren müssen, um die erforderlichen Lagergutsstücke 5 holen zu können, usw. Die Breite Z der Zinken 3 muss mindestens so gross sein wie die Summe aus der Breite G eines Fingers 11 oder 12 und der Länge N der Nase 13.

Fig. 3 ist die Arbeitsweise der vorliegenden Anlage entnehmbar. Wenn eine Stange 5 dem Fach 4 entnommen werden soll, dann werden die Finger 11 und 12 in den Bereich der Zinken 3 nur so weit abgesenkt, dass die Nase 13 sich gerade unter dem gewünschten bzw. unter dem letzten der gewünschten Stücke 5 von Lagergut befindet. Beim Absenken ist der Abstand zwischen der Frontwand 25 der Nase 13 und der Stirnfläche 31 des planen Fingers 12 mindestens so gross wie die Breite des Faches 4, damit die Finger 11 und 12 abgesenkt werden können, ohne an den Gutsstücken 5 zu streifen. Dann werden die Finger 11 und 12 gegeneinander bewegt. Der plane Finger 12 schiebt das bzw. die sich über der Nase 13 befindlichen Stücke 5 von Lagergut seitlich gegen den ersten Finger 11 hin. Die Nase 13 am ersten Finger 11 verschiebt dagegen das dieser Nase 13 gegenüberliegende Stück 5, das dem Fach 4 nicht entnommen werden soll, seitlich in entgegengesetzter Richtung. Hierbei gelangt der Nasenrücken 26 mit dem zuunterst liegenden auszulagernden Stück 5 in Eingriff und alle über der Nase 13 befindlichen Lagergutsstücke 5 werden derart verschoben, dass sie genau aufeinander liegen. Nun sind die gewünschten Stücke 5 von Lagergut zwischen den Fingern 11 und 12 geklemmt und ausserdem stützten sie sich auf der Nase 13 ab. Durch eine aufwärts gerichtete Bewegung der Finger 11 und 12 können diese Stücke 5 dem Fach 4 entnommen werden. In gleicher Weise erfolgt die Handhabung der in Fig. 1 dargestellten Lagergutsstücke 5, welche runden Querschnitt aufweisen.

Es versteht sich, dass die Höhe der Frontwand 25 der Nase 13 kleiner sein muss als die Höhe eines Stückes 5 von Lagergut. Um allen diesen Anforderungen leicht genüge tun zu können, ist das leicht austauschbare Einsatzstück 15 vorgesehen. Es liegen mehrere Einsatzstücke 15 mit verschiedenen Abmessungen vor allem der Nase vor und je nach der Art des zu lagernden Guts können Einsatztstücke 15 mit geeigneten Abmessungen gewählt werden.

## Patentansprüche

1. Lageranlage mit wenigstens einer Palette (1) für das Lagergut (5), wobei diese Palette Zinken (3) aufweist, welche sich vom Boden (2) derselben empor erstrecken und zwischen welchen die einzelnen Stücke von Lagergut aufeinanderliegend gelagert sein können, und mit einer Vorrichtung (10) zur Handhabung von Lagergut, die wenigstens ein Paar vertikal verlaufender Finger (11,12) aufweist, wobei die Finger vertikal verschiebbar und gegeneinander bewegbar sind, damit der Abstand zwischen der Frontwand des einen Fingers und der Stirnfläche des anderen Fingers mindestens so gross sein kann, wie der Abstand zwischen zwei aneinanderliegenden Zinken der Palette dadurch gekennzeichnet, dass das freie Ende wenigstens eines dieser Finger (11) mit einer seitlich abstehenden Nase (13) versehen ist, dass diese Nase sich von diesem Finger gegen den anderen Finger (12) hin erstreckt und dass die Länge des anderen Fingers, welcher keine Nase aufweist, kleiner ist als die Länge jener Partie des mit der Nase versehenen Fingers, welche sich vom Anfang dieses Fingers bis zum Ansatz der Nase erstreckt.

2. Lageranlage gemäss Anspruch 1, dadurch gekennzeichnet, dass die Breite (G) des Körpers des die Nase (13) tragenden Fingers (11) und die Länge (N) der Nase (13) zusammen kleiner sind als die Breite (Z) eines Zinkenkörpers (3).

3. Lageranlage gemäss Anspruch 1, dadurch gekennzeichnet, dass der Abstand (F) zwischen zwei benachbarten Zinken (3) der Palette grösser ist als die Breite (S) eines zu lagernden Lagergutsstückes (5), wobei dieser Abstand (F) allerdings kleiner ist als die doppelte Breite des in dieser Mulde (4) zu lagernden Stückes (5).

4. Lageranlage gemäss Anspruch 1, dadurch gekennzeichnet, dass die Endpartie des die Nase (13) aufweisenden Fingers (11) mit einem auswechselbaren Einsatzstück (15) versehen ist und dass an diesem Einsatzstück die Nase angeformt ist.

5. Lageranlage gemäss Anspruch 4, dadurch gekennzeichnet, dass eine der Seitenflächen (19) des Einsatzstückes (15) die Nase (13) aufweist und dass dieses Einsatzstück über seine Grundfläche an den Finger angeschlossen ist.

6. Lageranlage gemäss Anspruch 5, dadurch gekennzeichnet, dass die Stirnfläche des Fingers (11) eine Einbuchtung (14) aufweist, welche sich gegen den gegenüberliegenden Finger (12) hin öffnet und dass in dieser Einbuchtung die Grundpartie des Einsatzstückes eingesetzt und befestigt ist.

7. Lageranlage gemäss Anspruch 6, dadurch gekennzeichnet, dass die Grundpartie des Einsatzstückes (15) eine durchgehende Bohrung (16) aufweist, mit der ein Gewindeloch (17) im Finger (11) fluchtet und dass das Einsatzstück mit Hilfe einer Schraube an den Finger angeschlossen ist.

8. Lageranlage gemäss Anspruch 7, dadurch gekennzeichnet, dass im mittleren Bereich desjenigen Abschnittes des Einsatzstückes (15), welcher sich über der Grundpartie befindet, eine Vertiefung (18) ausgeführt ist, welche zur Aufnahme des Kopfes der Befestigungsschraube dient.

9. Lageranlage gemäss Anspruch 1, dadurch gekennzeichnet, dass die Höhe der Frontfläche (25) der Fingernase (13) kleiner ist als die Höhe eines Stückes (5) von Lagergut.

## Claims

1. Storage system with at least one pallet for the storage goods. Pallet features prongs protruding vertically from the pallet floor, in between which the individual items of the storage goods can be superposed. In addition, the storage system provides a device for handling storage goods. This device features at least one pair of vertical fingers, wherein they can be vertically adjusted and moved toward each other in order that the distance between the side of one finger and the facing side of the other finger is at least as wide as the distance between two adjacent vertical pallet prongs, and wherein the free end of at least one of these fingers has a laterally protruding heel reaching from this finger toward the other finger and the length of the other finger, which has no heel, is shorter than the length of that part of the finger which features the heel, which reaches from the base of the finger to the base of the heel.

2. Storage system as claimed in claim 1, wherein the width of the body of the finger carrying the heel and the length of the heel are, together, less than the width of the body of a prong.

3. Storage system as claimed in claim 1, wherein the distance between the two adjacent pallet prongs is larger than the width of the goods to be stored, wherein this distance is, however, smaller than the doubled width of the goods to be stored in this trough.

4. Storage system as claimed in claim 1, wherein the top section of the finger carrying the heel is fitted with an interchangeable inset piece, wherein the heel is moulded onto this inset piece.

5. Storage system as claimed in claim 4, wherein one of the side surfaces of the inset piece features the heel and wherein this inset piece is connected to the finger by its base.

6. Storage system as claimed in claim 5, wherein the inner side of the finger has a slot which opens towards the opposing finger, wherein the base of the inset piece is set and fixed in this slot.

7. Storage system as claimed in claim 6, wherein the base of the inset piece has a continuous hole which lies in alignment with a threaded hole in the finger, wherein the inset piece is attached to the finger by means of a screw.

8. Storage system as claimed in claim 7, wherein the central part of that area of the inset piece facing the ground base features a cavity in which the head of the fastening screw is set.

9. Storage system as claimed in claim 1, where in the height of the front side of the finger heel is less than the height of a single item of the storage goods.

## Revendications

1. Dispositif de stockage possédant au moins une palette (1) pour les marchandises à stocker (5); cette palette comporte des dents (3) qui se dressent verticalement à partir du corps (2) de cette dernière et dans l'intervalle desquelles différentes marchandises stockées sont superposées; il est en outre équipé d'un mécanisme (10) destiné à la manipulation des marchandises entreposées, mécanisme lui-même muni d'au moins une paire de butées alignées verticalement (11, 12); ce dispositif est caractérisé par la présence, à l'extrémité libre d'au moins une de ces butées (11), d'un taquet allant d'une butée à l'autre (12) et par le fait que les butées peuvent être déplacées verticalement et sont mobiles l'une par rapport à l'autre; l'intervalle entre la face antérieure d'une butée et la surface extérieure de l'autre étant au moins aussi important que celui qui sépare les deux dents de la palette positionnées l'une à côté de l'autre. La longueur de la butée qui ne comporte pas de taquet est inférieure à celle de la section de la butée munie d'un taquet qui va du début de cette butée au talon du taquet.

2. Dispositif de stockage, conforme à la revendication 1, caractérisé par le fait que la largeur (G) du corps de la butée (11) portant le taquet (13), plus la longueur (N) du taquet (13) sont inférieures à la largeur (Z) d'une dent (3).

3. Dispositif de stockage conforme à la revendication 1, caractérisé par le fait que l'intervalle (F) qui sépare deux dents voisines (3) de la palette est supérieur à la largeur (S) d'une marchandise entreposée (5), cet intervalle (F) étant toutefois inférieur à deux fois la largeur de la marchandise à stocker (5) dans cette cavité (4).

4. Dispositif de stockage conforme à la revendication 1, caractérisé par le fait que la portion finale de la butée (11) possédant un taquet (13) est équipée d'une pièce intercalaire amovible et que le taquet est façonné à partir de cette pièce intercalaire.

5. Dispositif de stockage conforme à la revendication 4, caractérisé par le fait qu'une des surfaces latérales (19) de la pièce intercalaire (15) possède un taquet et le fait que cette pièce intercalaire est attachée par sa base aux butées.

6. Dispositif de stockage conforme à la revendication 5, caractérisé par le fait que la surface extérieure de la butée (11) présente une anfractuosité (14) qui s'ouvre sur la butée opposée (12) et le fait que la base de la pièce intérimaire vient s'emboîter et se fixer dans cette anfractuosité.

7. Dispositif de stockage conforme à la revendication 6, caractérisé par le fait que la base de la pièce intérimaire (15) présente un alésage en continu (16) avec lequel s'aligne dans la butée (11) un trou taraudé (17) et le fait que la pièce intérimaire est fixée à la butée par un boulon.

8. Dispositif de stockage conforme à la revendication 7, caractérisé par le fait que dans la partie médiane de la section de la pièce interimaire (15) située au dessus de la base, une cavité (18) a été prévue pour loger la tête du boulon d'ancrage.

9. Dispositif de stockage conforme à la revendication 1 caractérisé par le fait que la hauteur de la face antérieure (25) du taquet de la butée (13) est inférieure à celle d'une des pièces de la marchandise entreposée (5).
